# EUROPEAN PATENT APPLICATION

(11) **EP 2 739 117 A1**
(43) Date of publication of application: **04.06.2014**
(21) Application number: 13194839.0
(22) Date of filing: 28.11.2013
(51) Int. Cl.: H04W 88/06, H04W 76/02

(54) **System and method for simultaneously routing traffic through multiple network interfaces**

(30) Priority: 29.11.2012 IL 22335112
(71) Applicant: Deutsche Telekom AG, 53113 Bonn (DE)
(72) Inventor: Himlich, Idan, 47212 Ramat HaSharon (IL); Mimran, David, 6451613 Tel-Aviv (IL); Shapira, Bracha, 84728 Beer Sheva (IL); Messalem, Guy, Tel-Aviv (IL)
(74) Representative: Schollweck, Susanne

(57) **Abstract**

A method for simultaneously routing traffic of data through multiple wireless network interfaces between two communication devices, either a server and a mobile unit or between two mobile units. The two communication devices are adapted to communicate via multiple interfaces, by dividing the original data to be transmitted through different interfaces. Data packets with a unique sequence number are created and a default routing path of a specific interface is assigned to each of the data packets, where each data packet is marked with a specific mark according to a specific rule, such that each mark refers to a specific interface. In case when the default routing path and the specific mark of each data packet are different, the routing path of the data packet is changed to the specific interface according to its marking and the data packets are delivered to a NAT module in order to change their IP source to the interface's IP.

## Description

### Field of the Invention

The present invention relates to the field of wireless communication networks. More particularly, the invention relates to a method for simultaneously routing traffic through multiple wireless network interfaces.

### Background of the invention

Today, most wireless communication devices are equipped with at least two wireless interfaces, such as 3G and Wi-Fi: These devices have multiple wireless interfaces that could give them the unique ability of holding communication sessions in different networks simultaneously. Unfortunately, the known communication scheme allows only one of the interfaces to be operational at a time.

Due to the rapid development of wireless technologies, a large number of research papers have been devoted to upgrading the quality of communication and generating new schemes and protocols for wireless devices in infrastructure and ad hoc modes. This research also includes papers on the usage of the two interfaces simultaneously. However, such solutions mainly focus on leveraging the multiple interfaces available at a mobile device in terms of optimal network performance delivered to a user.

To address this problem and to allow such devices to hold communication sessions in different networks simultaneously, a new and innovative communication schemes is required.

It is an object of the present invention to provide a multi-interface communication scheme which is capable of simultaneously connect a mobile communication device to different communication mediums and networks via two or more different communication interfaces (e.g., 3G and Wi-Fi simultaneously).

It is another object of the present invention to provide a multi-interface communication scheme which is capable of providing a continuous deployment of a communication session while changing from one communication interface to another.

It is yet another object of the present invention to provide a multi-interface communication scheme with enhanced security functionality while maintaining both secure and open communication sessions.

Other objects and advantages of the invention will become apparent as the description proceeds.

### Summary of the Invention

The present invention relates to a method for simultaneously routing traffic of data through multiple wireless network interfaces between two communication devices, a server and a mobile unit, or two mobile units, wherein said two communication devices adapted to communicate via multiple interfaces, by dividing the data (i.e., the original data) to be transmitted through different interfaces.

According to an embodiment of the invention, the method comprises the steps of:
a. creating data packets each of which having a unique sequence number;
b. assigning to each of said data packets a default routing path of a specific interface;
c. marking each of said data packets with a specific mark according to a specific rule, wherein each mark refers to a specific interface;
d. in case the default routing path and the specific mark of each data packet are different, changing the routing path of the data packet to the specific interface according to its marking; and
e. delivering the data packets to a NAT module in order to change their IP source to the interface's IP.

According to an embodiment of the invention, the method further comprises increasing the security over a wireless network by: a) creating a "dummy" data packet; and b) for each data packet which is the "real" data packet being sent from the specific interface, sending said "dummy" data packet from another interface. In this embodiment, the "dummy" data packet can be sent after receiving an acknowledgment from the server for the "real" packet, thereby making sure that on the server side the "real" packet is received. Alternatively, the "dummy" data packet can be sent with the same sequence number as the "real" data packet, wherein this should cause the server to drop said "dummy" packet.

According to some embodiments of the invention, the method further comprises increasing the security over a wireless network by splitting the data to multi-sessions (each session for a different interface) and manipulate this data so on the server side by applying a XOR operation on the bits of the data packets received from each of said interfaces, we will receive the original data (i.e., the data prior to the splitting).

According to an embodiment of the invention, the method further comprises establishing a communication between the mobile device and the server over two channels, wherein each channel communicates via a different interface, in such a manner that part of the information being sent from one channel while other information being sent form the other channel.

In another aspect the invention relates to a system for simultaneously routing traffic through multiple network interfaces between two communication devices, a server and a mobile unit or between two mobile units, comprises:
a. a marking module for marking every data packet with a specific mark, wherein every mark refers to a specific interface;
b. a routing module for routing data packets, according to various of routing rules (for example: all packet with ip destination of 192.168.1.131 will be send for interface "eth0" or packets with source ip of 10.0.0.1/24 will be assign to interface "wlan", etc.) and by assigning for each data packet a specific interface according to the mark of each of said data packets; and
c. a NAT module for verifying that each data packet that is transmitted through the assigned specific interface has the source IP address of that interface.

### Brief Description of the Drawings

In the drawings:
- Fig. 1 schematically illustrates a Multi-Channel Communication (MCC) scheme, according to an embodiment of the present invention;
- Fig. 2 is a flow chart generally illustrating an embodiment of the invention;
- Fig. 3 schematically illustrates a Flexible Session Service (FSS), according to an embodiment of the invention; and
- Fig. 4 schematically illustrates an exemplary implementation of MCC scheme against MIMA, according to an embodiment of the present invention.

### Detailed Description of the Invention

Throughout this description the term "interface" is used to indicate a particular set of formats, channels, modulation techniques, rules of communication, etc. that have been defined in one or more standards for communicating wirelessly. This term does not imply any particular communication method, and the invention is applicable to all suitable wireless communication protocols. For example, 3G, WiFi and Bluetooth are each considered different interfaces.

The present invention refers to a new Multi-Channel Communication (MCC) scheme that relies on the idea that a connection between a wireless communication device and a server (or between two wireless devices) includes one communication session over a first interface (e.g., Wi-Fi) and another communication session over a second interface (e.g., 3G). In various embodiments, the two wireless devices may communicate with each other using multiple protocols, by dividing the data to be communicated into multiple parts, and using each protocol to communicate different parts. This technique may be used in several different ways to provide different types of advantages. Each of the two wireless devices may serve any feasible function in the network(s) that are involved, such as network controller (access point, base station, central point, etc.), mobile device (mobile node, subscriber stations, STA, etc), relay station, server, or other. In some embodiments the data being communicated over the multiple protocols may be associated with a single application, such as but not limited to HTTP traffic, video streaming, file downloads, email, network information, etc.). Moreover, although the MCC scheme described herein with respect to 3G and Wi-Fi interfaces, it may be applied to other wireless interfaces in addition to Wi-Fi and 3G.

Reference will now be made to several embodiments of the present invention, examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

Unless otherwise indicated, the functions described herein may be performed by executable code and instructions stored in computer readable medium and running on one or more processor-based systems. However, state machines, and/or hardwired electronic circuits can also be utilized. Further, with respect to the example processes described herein, not all the process states need to be reached, nor do the states have to be performed in the illustrated order. Further, certain process states that are illustrated as being serially performed can be performed in parallel.

Similarly, while certain examples may refer to a smart phone, other computer or electronic systems with wireless communication capabilities can be used as well, such as, without limitation, a tablet, a network-enabled personal digital assistant (PDA), a networked entertainment device, a cellular phone and so on.

The terms, "for example", "e.g.", "optionally", as used herein, are intended to be used to introduce non-limiting examples. While certain references are made to certain example system components or services, other components and services can be used as well and/or the example components can be combined into fewer components and/or divided into further components. Moreover, the example appearance and terminology as depicted and described herein, are intended to be illustrative and exemplary, and in no way limit the scope of the invention as claimed.

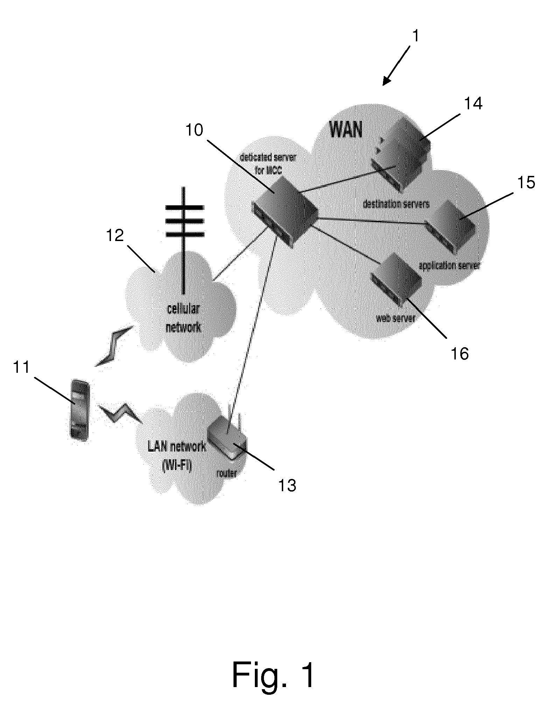

Fig. 1 shows a MCC scheme that can be used in conjunction with the invention. The MCC scheme illustrated in this figure is particularly convenient because it can be applied to existing communication networks without the need to carry out any alterations in the IEEE802.11 standard or any other standard protocol. The MCC scheme generally indicated by numeral 1 in the figure comprises a MCC server 10 and a mobile communication device 11 that are capable of simultaneously communicating via at least two different interfaces (e.g., a 3G interface 12 over a cellular network and a Wi-Fi interface 13 over a LAN network). The MCC server 10 is further adapted to communicate with common servers, such as application server 15, web server 16 and/or other destination servers 14.

According to an embodiment of the present invention, the MCC scheme 1 includes two main components, one on the mobile communication device 11 (i.e., the client side) and the other on the MCC server (i.e., the server side).

### Client side

The entity on the client side is responsible for full control of all packets routing, i.e., it will bypass the usual routing process which is usually done by a corresponding routing table and route each data packet from every interface as we wish. For example, this entity can be implanted under the Linux environment for android based mobile phones, as will be described in further details hereinafter.

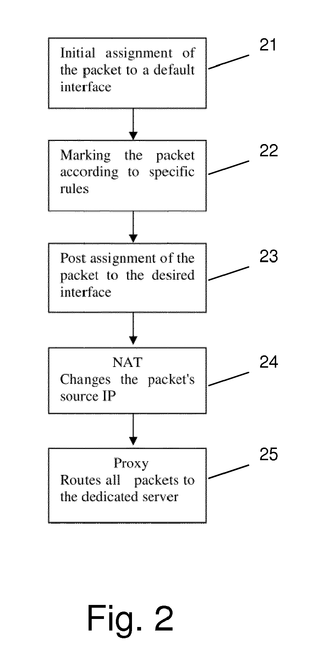

The creation of the client side entity requires integrating a couple of network features into an integrated network model that fulfills the following requirements (i.e., each data packet goes through four stage processes as shown with respect to Fig. 2):
1) Stage 1 (block 21) - The packet is assigned to a default interface according to the routing table (the ordinary process);
2) Stage 2 (block 22) - The packet goes through a marking module. The marking module marks all packets according to one or more rules as defined either by the user of the mobile device 11 or by other predetermined setting. The marking represent the desired interface through which the packet will be sent;
3) Stage 3 (block 23) - If the packet was marked with a marking that relates to an interface other than the default one, it has to be delivered to another predefined routing table which assigns it to the desired interface as set by the marking; and
4) Stage 4 (block 24) - After the packet is assigned with the desired interface, it is sent to a NAT module in order to change its source IP address to the IP address of the new interface it will be delivered from (the source IP address which was originally assigned with the value of the default interface). After the packet's source IP was changed, a proxy can be used (block 25) to route each packet to the relevant destination (e.g., dedicated server).

In addition to the network requirement, the client entity may further comprise a User Interface (UI) for allowing the user to map each software application with the appropriated interface it will run over. The software application refers to a program designed to run on smart phone, tablets, and other computer based mobile devices.

Additionally, the client entity may include additional features, such as means for selecting the desired security mode for a specific application or selected information within a specific application. This can be used in order to support an enhanced security features as will be described in further details hereinafter. Another feature is a process that can be assigned to identify whether the mobile device 11 is near exiting the Wi-Fi coverage area, e.g., by collecting the RSS (Received Signal Strength) values. An important feature is an implementation of a proxy to the client entity in order to send all the packets to the dedicated MCC server 10 and, from there, to the original destination server 14 (application server 15, web server 16, etc. as shown in Fig. 1).

### Server side

The entity on the server side is in charge of integrating data arriving to the MCC server 10 from the client of the mobile device 11 which expands on several different sessions, sending the integrated information to the destination server 14, receiving the information from the destination server 14 and sending it back to the client via the various interfaces. The MCC server 10 combines the incoming traffic from the client of the mobile device 11 and then sends the combined session to the destination server 14.

Taking into consideration that the sessions are conducted from several interfaces, and packets in different sessions differ in their source IP, the challenge on the server side is to combine all the data from the client to one session and deliver it to the destination server 14 in such a way that the process is transparent to the destination server 14.

For this purpose we require a preliminary registration, which will help in identifying all the source IP addresses belonging to each client (one for every interface). This process includes two steps. First, the client sets up a connection to the MCC server 10 in one of the interfaces and secondly, the client receives a key which will then be sent back to the MCC server 10 on all the interfaces. Then, the MCC server 10 extracts the source IP from all the packets and saves them in a data base under a specific client. This process allows for server matching between sessions and clients.

As this process is based on the IP source addresses of the different interfaces of the client, every time one of these interfaces changes its source IP, the registration process will be initiated again.

Apart from identifying all the relevant sessions, the combining process also includes examining different packets (from all relevant sessions) in order to detect a duplication (which will be created intentionally as described hereinafter with further details). If the MCC server 10 detects duplication, it removes the duplicated packets from the unified session.

The output of the combining process in the MCC server 10 is a single integrated session that should be delivered to the destination server 14. This is done by implementing the proxy server side. The connection with the destination server 14 is conducted via the MCC server 10 that transforms the MCC process transparently to the destination server 14.

Receiving data from the destination server 14 and sending it back to the client at the mobile device 11 involves the following:
After receiving data from the destination server 14, the MCC server 10 must decide how to spread the data over the different interfaces on the client side. This can be done in many ways (depending on the application, client preferences, and etc.). Nevertheless, there is a rule it must follow:
   Any interface which did not participate in the assembly of the session with the destination server 14 (the session with the destination server was created from the sessions with the client) cannot receive data, i.e., if a certain session with a given client was assembled from only one interface, then all data from the destination server must return to this interface.

It is important to point out that the proxy process (on the client side and on the server side) can be avoided if the sever side entity is implemented directly on the destination server 14, e.g., in the application server 15 or the web server 16, thereby eliminating the need to use a dedicated MCC server.

As will be appreciated by the skilled person the arrangement described in the figures results in a novel network scheme that enables routing traffic through multiple interfaces.

All the above will be better understood through the following illustrative and non-limitative examples.

### Implementation on android based smart phone

In this example, the client side entity of the MCC was implemented on a Samsung Galaxy S2 smart phone with an android based Operating System (OS). The android OS does not support operating both interfaces for internet connection (and not the Wi-Fi interface as a hot spot). Thus, the android source code has to be modified. In addition, we needed to develop a network module to control the routing process.

Our guidelines for the modification were minimal in intervention and as general as possible in order to make the installation of the entity smooth and simple (for example, without deleting data saved by the user). These guidelines removed the straightforward approach of adding a java code to the android source code and compiling the code and installing the new operation system on the device. Instead, we separated the solution into two solutions: (a) we prevent the android operating system from shutting down the 3G interface when we are turning on the Wi-FI interface, and (b) we developed C and Java code for the routing process.

### 1) Keeping two live interfaces in android

In order to prevent the android operating system from shutting down the 3G interface, we tracked the class that is called when the Wi-Fi is turned on. We copied the compiled class from an android device onto a Linux PC and used Smali (an assembler for android's compiled class format) to decompile the class. The decompiled code in the Smali assembly syntax was changed by deleting the calls for closing the 3G interface and then compiling them again. The new class moved to the device and replaced the old class (after wrapping with another android's compile class format).

After restarting the device, we could operate both interfaces at the same time.

### 2) Develop code for controlling the routing process

The code was written in two different levels. In the low level, we wrote a "C" code that uses the Netfilter within the Linux kernel. This code implements the four steps described in hereinabove with respect to Fig. 2:
a) The defualt rotuing is done by the main routing table;
b) The mark is carried out by setting the Netfilter mark;
c) We set rules (in the IP rules table) in order to direct each marked packet to a specific routing table (routing table per interface); and
d) We used the NAT netfilter.

We used java (and JNI) in the high level in order to create a java API for controlling the packets. In addition, we used the android API for implementing the Proxy.

The main advantages of the MCC scheme of the present invention are described with respect to the following implementations examples.

### Flexible Session Service (FSS)

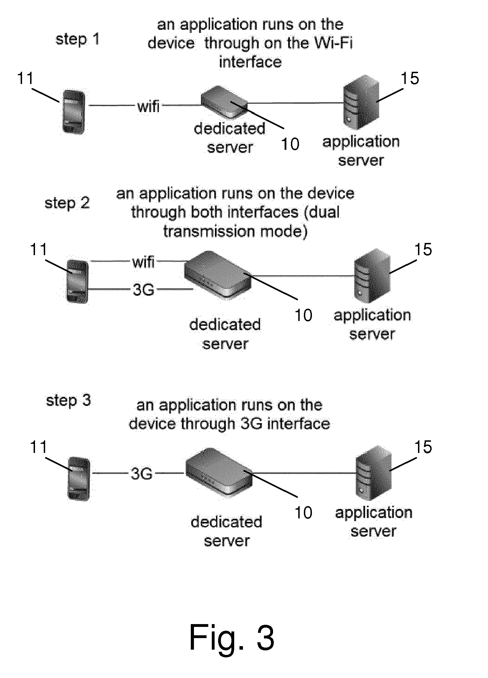

One of the major drawbacks in the usage of the Wi-Fi channel is that the users must stay in the Wi-Fi converge area as long as they want to maintain the connections they made. This drawback can lead to an absurd situation in which, although we have a mobile phone, we are stuck in a small geographical area in order to preserve the existence of a call on Skype or FTP session. The suggested MCC scheme of the present invention, solves this problem by shifting the communication channel to the 3G interface in a completely transparent way to the destination server, thus allowing the users to exit the Wi-Fi converge area and still maintain their connections. Fig. 3 schematically illustrates the shifting steps from one interface to another. At first (step 1), the communication session between the mobile device 11 and the application server 15 runs via the MCC server 10 over the Wi-Fi interface. At next (step 2), the communication between the mobile device 11 and the MCC server 10 expanded into dual transmission mode (i.e., two interfaces are now active, the original Wi-Fi interface and in addition also a 3G interface was established). At next (step 3), the Wi-Fi interface is terminated while 3G remain active. This communication process occurs only between the MCC server 10 and the mobile device 11, and it remains completely transparent to the application server 15 (i.e., the connection with the application server 15 remains untouched).

This communication process can be done for multiple applications and it refers herein to a Flexible Session Service (FSS). The operation of the FSS is described in view of the different entities, the client and the MCC server as follows:
1) The client - At first, the entity on the client side raises a flag that the user is near exiting the coverage area (by measuring the signal strength). This flag initiates a dual transmission phase in which all the network communication is transmitted twice to our dedicated server, one on each interface. When the connection to the Wi-Fi network falls down, the device returns to transmission in one interface - 3G.
2) The dedicated server- the first stage of the dedicated server will include initiating registration and then conducting two sessions on the two interfaces. Then, the sessions on the Wi-Fi are broken down and the server conducts the session with the client on the 3G. In both stages, the session with the destination server will continue unchanged.
3) The destination server- because the destination server conducts the connection with the dedicated server only and not with the client, the destination server is not aware of how the client sends the information (through Wi-Fi or through 3G) and therefore, even when the Wi-Fi interface of the client is down, the destination server will continue be uninterrupted.

### Security Capabilities

Despite the wide deployment of Wi-Fi access points and their high bandwidths (which are significantly greater than the bandwidth of other wireless channels), the Wi-Fi still suffers from a serious drawback, namely, the lack of security. When we use public Wi-Fi, we expose ourselves to many attacks, one of which is identity theft (hacking back accounts, stealing confidential information, etc.). These attacks can be the work of a by a professional hacker who sniffs the Wi-Fi network and captures the information (most of the public access points can be hacked in a matter of minutes) or by the supplier of the Wi-Fi.

These security risks prevent many users from experiencing high speed connections and utilization of larger bandwidth by connecting to Wi-Fi network.

On the other hand, modern wireless devices hold a 3G interface that may provide much better security measurements, but significantly lower bandwidths, which can make it impossible to run certain network applications over the cellular network.

These limitations create an impossible situation for users. On one hand, users need bandwidth and speed in order to properly use their applications, yet on the other hand, they demand security and protection of the information. The MCC scheme of the present invention allows handling these security threat issues.

The motivation for the innovative security solutions is as follows. The common security solution is using SSL capabilities. Nevertheless, securing data by means of the SSL protocol may cause the following problems.
1) Due to the fact, that SSL is based on the Public Key Infrastructure (PKI), the verification of the certificate correctness is mandatory when opening the SSL connection. Hence, unlike the suggested MCC scheme, the SSL has a dependency on a verification process.
2) There exist applications and web servers which do not support SSL. We provide a user with a choice regarding the level of security. Our solutions do not depend on the support of SSL in specific applications or web servers.
3) Using SSL significantly reduces performance (due to adding a layer of encrypting and decrypting). The suggested MCC do not rely on this overhead, and, therefore, they do not decrease performance. Applying such light overhead solutions are very important in the real time applications such as Voice Over IP (VOIP).

### Security solutions in using public Wi-Fi networks

The presented MCC approach, based on the combination of the 3G and the Wi-Fi infrastructures, provide enhancement of the overall security level. The following security solutions can be implemented:
1) Session virtualization (see Figure 5). A single session between a client (sender) and a server (receiver), and *vice versa,* is implemented by means of two sequential sessions over 3G and Wi-Fi interfaces. Let us assume that, at most, one connection (3G or Wi-Fi) may be compromised by a potential adversary Adv at a given time period, and the network protocol is TCP/IP or any other protocol that preserves sequential numeration of packets. Then, for every packet which is sent from one interface, a "dummy" packet is generated and sent from the other interface. The server side reveals the correct data packet by means of the following procedure:
   a) The "dummy" packet is sent after receiving an acknowledgment from the server for the "correct" packet.
   b) The sequential numbers (for example, 32-bits sequential number of the first data byte in the TCP segment) are the same in both correct and garbage packets. Due to the TCP functionality and the mechanism of ACK generating procedure, the "dummy" packet received after the "correct" packet is treated as duplicated, and, therefore, is discarded by the receiver.

It should be noted that the session virtualization technique is appropriated for transmission of sensitive data, such as cryptographic keys, as this techniques slow the traffic significantly.

### Secure communication by means of two parallel sessions

Two sessions (one at each interface) are performed:
a) The sender generates a fresh random number R for any message M being sent. A message M, xored with R, M XOR R, is sent via a randomly chosen interface, and R is sent via another interface. Assuming, as in the previous case, that the adversary Adv can compromise, at most one interface in a given time period, Adv cannot decrypt the securely encapsulated message M.
b) The receiver (server) side computes XOR of the bits, received via both interfaces, and extracts the correct message M.

### Maintaining both secure and open sessions

Taking into consideration that the 3G channel is more resistant against adversarial vulnerability, a client-server communication may be performed simultaneously or sequentially via two channels; the 3G as the secure one and the Wi-Fi as the open one. For example, credit card numbers, passwords, and other sensitive data may be transmitted via the "secure line" while shopping list, pictures, and other not sensitive data may be transmitted via the "open" Wi-Fi line. In this way, a secure Point to Point connection may be supported.

### Resistance against Man-in the-Middle attack (MIMA)

Regarding the approach taken in the publication "Cryptography: Theory and Practice" by D. R. Stinson, Chapman & Hall/CRC, 5-th edition, 2006, we assume that an adversary Adv can alter packets sent between the sender and the receiver and Adv has the following powerful capabilities:
a) Adv can create new messages and insert them into the channel;
b) Adv can change messages that have been sent between the sender and receiver via the channel;
c) Adv can change messages in the channel so that the messages are sent to another destination rather than to the correct receiver.

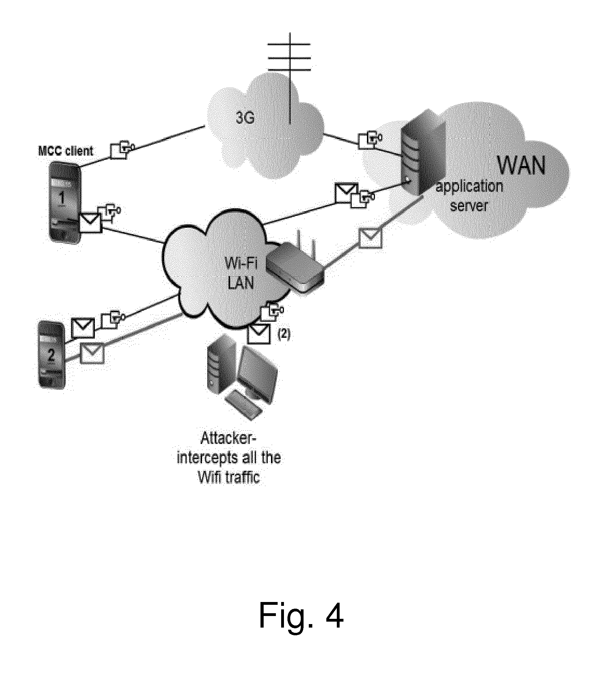

Referring now to Fig. 4, the following exemplary scheme can be used as resistant against the MIMA. Let us assume that the 3G channel is secured by a certain security protocol. Then, the key agreement is implemented via the 3G channel. The client shares their public key KPC with the server and server shares its public key KPS with the client. The private keys KPrC and KPrS of the client and server, respectively, are kept secret. Then, the communication session between the client and the server is performed via an unsecure Wi-Fi channel.

This scheme is secure against MIMA due to the following considerations.
a) First, Adv cannot obtain and impersonate the public keys of the honest parties because these keys are securely distributed via the 3G channel which is not controlled by Adv.
b) The message digest mechanism is applied in order to preserve message integrity. If the Adv changes the content of the message sent from the client to the server, or *vise versa,* the message digest will be revealed as incorrect and the message will be ignored by the receiver.

By implementing the MCC of Fig. 4, the messages of User 1 are protected from any attacker on the Wi-Fi and he can still exploit the high bandwidths of the Wi-Fi. In contrast to User 1, all the messages of User 2 can be intercept and decrypt by an impersonate attacker.

Another capability the MCC provide is enhancement of the user experience using network applications (voip applications, browsers, online gaming, etc.). Every interface connects a user to a different network with its own characteristics (for example, RSS, Bit Error rate (BER), and Jitter). In addition, every application (or every family of applications) has its own requirements of Quality of Service (QoS). In order to grant the users with the best possible experience, we must match the parameters of the networks and the applications QoS requirements. This is carried out by extracting the parameters of the different networks. It is done by operating number of interfaces simultaneously and having full control over routing of packets to the active interfaces. We believe that the MCC will be able to enhance the user's experience using network applications.

Another issue regarding using network applications is that, today, there are some applications cannot run over the Wi-Fi interface because the Wi-Fi router blocks the relevant ports. A clear example of this is "Viber" (a VOIP application), which cannot operate over many Wi-Fi networks. MCC also handles this issue by allowing the user to choose which interface each application will run over.

There additional advantages that can be provided by the suggested MCC scheme, such as the ability to control the bandwidth utilization, a unique ability to send packets from one interface and receive on another interface, and it enables to control on outgoing traffic (e.g., stop traffic for a specific source, stop traffic which is identified as malicious, etc).

All the above description and examples have been given for the purpose of illustration and are not intended to limit the invention in any way. Many different mechanisms, methods of analysis, electronic and logical elements can be employed, all without exceeding the scope of the invention.

## Claims

1. A method for simultaneously routing traffic of data through multiple wireless network interfaces between two communication devices, either a server and a mobile unit or between two mobile units, wherein said two communication devices adapted to communicate via multiple interfaces, by dividing the original data to be transmitted through different interfaces.

2. The method according to claim 1, further comprising the steps of:
a. creating data packets each of which having a unique sequence number;
b. assigning to each of said data packets a default routing path of a specific interface;
c. marking each of said data packets with a specific mark according to a specific rule, such that each mark refers to a specific interface;
d. in case the default routing path and the specific mark of each data packet are different, changing the routing path of the data packet to the specific interface according to its marking; and
e. delivering the data packets to a NAT module in order to change their IP source to the interface's IP.

3. A method according to claim 2, further comprising increasing the security over a wireless network by:
a) creating a "dummy" data packet; and
b) for each data packet which is the "real" data packet being sent from the specific interface, sending said "dummy" data packet from another interface.

4. A method according to claim 3, wherein the "dummy" data packet being sent after receiving an acknowledgment from the server for the "real" packet, thereby making sure that on the server side the "real" packet is received.

5. A method according to claim 3, wherein the "dummy" data packet being sent with the same sequence number as the "real" data packet, wherein this should cause the server to drop said "dummy" packet, thereby making sure that on the server side the "real" packet is received.

6. A method according to claim 2, further comprising increasing the security over a wireless network by splitting the data to multi-sessions (each session for a different interface) and manipulate this data so on the server side by applying a XOR operation on the bits of the data packets received from each of said interfaces, we will receive the original data.

7. A method according to claim 1, further comprising creating a communication with the server on two channels, each channel communicate via a different interface, wherein part of the data being sent from the first channel while other data being send form the second channel.

8. A system for simultaneously routing traffic through multiple network interfaces between two communication devices, either a server and a mobile unit or between two mobile units, comprising:
a. a marking module for marking every data packet with a specific mark, wherein every mark refers to a specific interface;
b. a routing module for routing data packets, according to various of routing rules and by assigning for each data packet a specific interface according to the mark of each of said data packets; and
c. a NAT module for verifying that each data packet that is transmitted through the assigned specific interface has the source IP address of that interface.
